(19) Europäisches Patentamt

European Patent Office

Office européen des brevets

(11) **EP 1 516 207 B1**

## (12) EUROPEAN PATENT SPECIFICATION

(45) Date of publication and mention
of the grant of the patent:
**06.03.2019 Bulletin 2019/10**

(21) Application number: **03732264.1**

(22) Date of filing: **25.06.2003**

(51) Int Cl.:
***G01V 3/12*** *(2006.01)*

(86) International application number:
**PCT/DK2003/000438**

(87) International publication number:
**WO 2004/003591 (08.01.2004 Gazette 2004/02)**

(54) **A METHOD OF AND A SYSTEM FOR SURVEILLANCE OF AN ENVIRONMENT UTILISING ELECTROMAGNETIC WAVES**

EIN VERFAHREN UND EIN SYSTEM ZUR ÜBERWACHUNG EINER UMGEBUNG MIT ELEKTROMAGNETISCHEN WELLEN

PROCEDE ET SYSTEME DE SURVEILLANCE D'UN ENVIRONNEMENT UTILISANT DES ONDES ELECTROMAGNETIQUES

(84) Designated Contracting States:
**AT BE BG CH CY CZ DE DK EE ES FI FR GB GR HU IE IT LI LU MC NL PT RO SE SI SK TR**

(30) Priority: **26.06.2002 DK 200200997
26.06.2002 US 391240 P**

(43) Date of publication of application:
**23.03.2005 Bulletin 2005/12**

(73) Proprietor: **ITU Business Development A/S
2300 Copenhagen S (DK)**

(72) Inventor: **S RENSEN, John, Erik, Aasted
DK-2830 Virum (DK)**

(74) Representative: **Plougmann Vingtoft a/s
Strandvejen 70
2900 Hellerup (DK)**

(56) References cited:
**EP-A- 0 743 540      DE-C- 19 521 511
GB-A- 2 350 898      US-A- 4 476 459
US-A- 5 973 996      US-B1- 6 288 640**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present invention relates to a method of and system for surveillance of a physical environment. More particularly, the present invention relates to a method of and system for surveillance of a physical environment using electromagnetic waves. The physical environment considered is typically around and inside buildings, open places, open air areas and the like, but might also be concentrated local volumes, e.g. a part of an indoor room. The environment is typically composed of electrically conducting and non-conducting solid construction materials, e.g. iron reinforced concrete and wood, and biological construction materials which constitutes e.g. human beings, animals, trees, but it might also be empty. Furthermore, the physical environment may contain materials in a liquid state, e.g. water. A general concept of preferred embodiments of the present invention relates to surveillance of a physical environment by measuring changes in the propagation properties of electromagnetic waves through the environment.

**Background of the Invention**

US 4,476,459 discloses a system comprising a transmitter antenna and a receiver antenna mounted within an interrogation zone, formed by the space around the said transmitter and receiver antennas. This transmitter, receiver system is used for detecting the passage of a resonant circuit, through the interrogation zone, by using the following function sequence:

1. The transmitter delivers a short electromagnetic pulse to the interrogation zone.
2. If a resonant circuit is present in the interrogation zone, it receives an electromagnetic energy pulse from the transmitter.
3. Having received the said electromagnetic energy pulse, the resonant circuit resonate at its resonance frequency and thereby transmits energy to the interrogation zone receiver antenna. The signal transmitted from the resonant circuit is decaying in time, and this time decay is used in the receiver for detecting the presence of a resonant circuit, and reduce the number of erroneous detections, which might originate in the electromagnetic noise from the environment.

EP 0 743 540 A2 discloses a system being adapted to detect the presence of foreign objects inside a robbery-prevention security antechamber, e.g. commonly used in banks. The antechamber consists of a plurality of radiofrequency emitting elements, associated with a plurality of receiving units. The six walls of the antechamber are preferably made from electrically conducting materials, which can reflect microwaves in the range of 10 GHz. The antechamber is considered as a resonant cavity, where the distribution of the electromagnetic field depends on the geometric dimensions of the cavity (the antechamber) and the materials in the cavity. A modification of the situation in the antechamber, e.g. by the passage of a person, will change the distribution of the standing wave electromagnetic field. The modification can be detected by analyzing the standing wave electromagnetic field before passage of a person and compare it to the field after passage of a person. The transmitters and receivers are positioned in a two dimensional grid in alternating grid points in the ceiling. An important feature of the transmitters is that they have a sufficient spectral purity, to obtain stable standing wave analysis. The measurement of the standing wave field in the antechamber Is carried out by enabling the transmitters one-by-one, and carry out a simultaneous recording of the field using all receivers. These measurements are then compared to what is obtained when a person passes the chamber using the same said measuring procedure, and thereby a detection of a foreign object in the antechamber is obtained.

US 6,288,640 B1 discloses a system comprising a plurality of sensors and a corresponding plurality of receivers. The sensors receive an FM signal broadcast by a transmitter, preferably a commercial FM radio station. Each receiver receives, via the associated sensor, radio frequency signals comprising a multiplicity of transmissions at different frequencies, within a predefined frequency spectrum. The receiver detects the radio frequency signals and computes, for each of a plurality of successive time intervals and for each of the transmission frequencies, a measurement of the signal amplitude over the time interval, compares the signal amplitude measurement with at least one threshold and, If the threshold is exceeded, generates a potential alarm signal. An alarm signal might be generated if a preset number of a multiplicity of the transmission frequencies have detected an alarm. No comparison between two independently transmitted and received signals is performed.

GB 2350898 discloses system having a transmitter for transmitting an acoustic signal into the space; a receiver for receiving an acoustic signal resulting from reflection of the transmitted acoustic signal within the space; and a control unit coupled to the transmitter and the receiver and having: a first mode of operation in which it is capable of causing the transmitter to intermittently transmit an acoustic signal into the space and of analysing the resulting signals to determine whether the resulting signals are indicative of a potential intrusion into the space; and a second mode of operation in which it is capable of causing the transmitter to continuously transmit an acoustic signal into the space and of analysing the resulting signal to determine whether the resulting signal is indicative of a potential intrusion into the space; and wherein the control unit is configured to enter the second mode of operation if in the first mode of operation it is determined that the resulting signals are indicative of a potential intrusion into the space.

US6307475 discloses a system for detecting and tracking movement within a building having a plurality of portable microwave detector units for deploying outside the walls of the building. Each detector unit has a microwave module for transmitting microwaves through the building walls into a monitored area and for detecting radiation reflected back to the unit from the monitored area, and an output device for transmitting an alarm signal from the unit if a shift is detected in the reflected radiation frequency, indicating movement within the area. A receiver unit receives alarm signals from the detector units and produces an output signal for each detector unit currently detecting movement to provide the user with information on the location of any movement within the building.

**Summary of the Invention**

It is an object of the present invention to provide a surveillance system which is simple to implement and use.
It is a further object of the present invention to provide a surveillance system which is capable of utilising installations which are already present for other purposes.
It is an even further object of the present invention to provide a surveillance system which does not require high spectral purity of the transmitted signals.
It is an even further object of the present invention to provide a surveillance system which is dynamical in use.
It is an even further object of the present invention to provide a surveillance system which does not require heavy computations in order to determine whether a change has occurred.
It is an even further object of the present invention to provide a surveillance method using a surveillance system having the advantages outlined above.
According to a first aspect of the present invention, the above and other objects are fulfilled by providing a surveillance system comprising at least one transmitter, each being adapted to transmit an electromagnetic signal, and at least one receiver, each being adapted to receive an electromagnetic signal, said system being further adapted to:

- transmit, by use of one of the at least one transmitters, a first electromagnetic signal and a second electromagnetic signal, the second signal is succeeding the first signal,
- receive said first and second electromagnetic signals, by use of one of the at least one receivers,

the system further comprising means for comparing the received first signal and the received second signal in order to detect a difference, if present, in said two signals, said difference being caused by a physical change present in the signal path between at least one of the transmitting transmitters and at least one of the receiving receivers, said change occurring between initiation of transmittal of the first signal and termination of the receipt of the second signal, characterized in that, the transmitter(s) and the receiver(s) are components of a wireless network which transmitter(s) and receiver(s) are used both for data transmission and for transmitting and receiving said first and second signals.
According to a second aspect of the present invention the above and other objects are fulfilled by providing a surveillance method, the method utilizing at least one transmitter, each being adapted to transmit an electromagnetic signal, and at least one receiver, each being adapted to receive an electromagnetic signal, the method comprising the steps of:

- transmit, by use of one of the at least one transmitters, a first electromagnetic signal and a second electromagnetic signal, the second signal is succeeding the first signal,
- receive said first and second electromagnetic signals, by use of one of the at least one receivers,
- comparing the received first signal and the received second signal in order to detect a difference, if present, in said two signals, said difference being caused by a physical change present in the signal path between at least one of the transmitting transmitters and at least one of the receiving receivers, said change occurring between initiation of transmittal of the first signal and termination of the receipt of the second signal,

characterized in that, the transmitter(s) and the receiver(s) are components of a wireless network which transmitter(s) and receiver(s) are used both for data transmission and for transmitting and receiving said first and second signals.
In the present context, the term 'succeeding the first signal' should be understood in such a way that the first transmitted signal and the second transmitted signal are temporally separated in such a way that the first signal is transmitted before the second signal is transmitted.
The physical change is an actual change which has taken place in the physical environment which is subject to the surveillance. It may, e.g., be a person moving through a room, switching on/off of light, heat, air condition, water, etc., opening/closing of a door or a window, and/or any other physical change in the environment. In particular, in case the physical change is a person moving through a room, this may indicate that an intruder has entered the room, and an alarm may therefore be activated. Alternatively, in case light, heat, air condition, water, etc. has been switched on/off, this might indicate a failure in the corresponding system, and a suitable alarm may be activated.

In case a difference is not detected between the two signals, this indicates that no physical change is present. The method steps are then, preferably, repeated until a change is detected and appropriate actions are taken.

The signal path between at least one of the transmitters and at least one of the receivers may be the line of sight, if possible, between said transmitter and said receiver. Alternatively or additionally, the signal path may be a path comprising one or more reflections of the signal and/or one or more refractions of the signal. In any case it is to be understood as the actual path travelled by the signal from the transmitter transmitting the signal to the receiver receiving the signal.

The change should occur between initiation of transmittal of the first signal and termination of the receipt of the second signal, i.e. during the time in which at least one of the signals is under way from a transmitter to a receiver. That is, a physical change may be discovered if it takes place while a 'measurement' is performed.

The first and second signals may be transmitted from the same transmitter. Alternatively, two different transmitters may transmit the first and the second signals.

Similarly, the first and second signals may be received by the same receiver, or by two different receivers.

In one embodiment the first and second signals may be transmitted by the same transmitter, but received by two different receivers. In another embodiment the first and second signals may be transmitted by two different transmitters, but received by the same receiver. Alternatively, the two signals may be transmitted by the same transmitter and received by the same receiver, or they may be transmitted by two different transmitters and received by two different receivers.

The comparing means may be adapted to detect a difference in signal strength between the first received signal and the second received signal. Alternatively or additionally, other signal parameters may be compared, such as frequency, polarization, delay, and/or any other suitable signal parameter.

In one embodiment of the present invention the comparing means may comprise processing means for processing the first and/or the second received signal(s) before comparing them, the comparison being performed on the basis of the processed signals.

In this embodiment the comparison is performed on one or more quantities derived from the signals. Alternatively or additionally, the comparison may be performed on a function of the first and second received signals. Alternatively to this embodiment, the comparison may be performed directly between the two signals in the time domain, or in the frequency domain, e.g. by spectral subtraction, or by similar methods.

The first signal may be transmitted during a pre-selected first time window and the second signal may be transmitted during a pre-selected second time window. The first and second time windows may have equal durations. Alternatively, the durations of the two time windows may be different.

Each of the signals transmitted may be a constant signal, such as a carrier wave or a carrier wave like. Alternatively, they may be known impulses or impulse like signals.

Preferably, the transmitted signals are electromagnetic signals, such as light signals, radio frequency (RF) signals, infrared (IR) signals, etc. Alternatively, the signals may be of any other suitable kind, such as acoustic signals, electrical signals, a beam of particles, or any other suitable kind of signal.

The first and the second signals may be transmitted as a first and a second set of packets of electromagnetic radiation, in which case the receiver(s) receive the first and second sets of packets. In the present context the term 'packet' is to be understood as an indivisible unit of information transfer between transmitter and receiver.

The comparing means may be adapted to compare the statistics on the signal strength of each packet to identify differences between the energy contents of the first and the second set of packets. Alternatively or additionally, other signal parameters of the packets may be compared, such as spectrum, polarization and/or delay.

According to the invention, the transmitter(s) and the receiver(s) are components of a wireless network used for data transmission and/or positioning, such as a wireless local area network (WLAN) used for data transmission and/or positioning. A wireless network which is already installed in a specific area for the purpose of providing wireless data transmission possibilities, may be used for surveillance purposes. This is a great advantage, because the surveillance system in this embodiment does not require separate installations. It is therefore very easy and very cost effective to provide a surveillance system according to this embodiment.

In one embodiment at least one transmitter and at least one receiver may be combined into a transceiver. All the transmitters/receivers of the system may pair-wise be combined into transceivers, in which case all 'units' of the system may function as a transmitter as well as a receiver. This embodiment provides a system of great flexibility.

The comparing means may be adapted to compare the detected difference to at least one known value, so as to identify the physical change causing the difference. In this embodiment the known value(s) may represent various known physical changes. The physical changes may previously have been 'detected' under controlled circumstances in order to establish a 'reference' or a number of 'references'. When the surveillance system is operating, it is thus possible to compare the obtained results with this/these reference(s). In case the obtained results match the reference/one of the references, the nature of the physical change may, thus, be determined. Thus, in case it is determined that the physical change is due to a person moving through the room, an intruder alarm may be activated, while the intruder alarm is not activated in case it is determined that the physical change is due to a heater being turned on or off.

The system may further comprise means for collecting and storing previously obtained information relating to a plurality of compared signals, and means for comparing said information in order to allow for evaluation of a temporal development of the obtained information. In this embodiment a long term surveillance of the volume of interest is provided for. When information relating to the compared signals are stored, it is possible to monitor how the signals develop over time. This may, e.g., be used for adjusting a 'reference' as described above, or may be used for detecting changes in the volume, e.g. a gradual change of water contents.

The system may further comprise means for determining the position of physical changes in the volume of interest. In this embodiment it is not just detected that a physical change has occurred, but also the position in which this change has occurred. This may be important in order to determine which actions to perform in case a physical change is detected. In this embodiment it is necessary to have a physical model of the volume of interest. The 'position information' (e.g. originating from transmitted/received signals which have been reflected, refracted or damped by an object which has entered the volume of interest) may then be combined with the physical model in order to establish the position of the physical change.

## Brief Description of the Drawings

The present invention, and in particular preferred embodiments thereof, will now be presented in connection with the accompanying drawing, in which

Fig. 1 shows an environment according to a preferred embodiment of the present invention, the environment comprising a room with four walls, a floor and a ceiling, and

Fig. 2 shows an environment according to another preferred embodiment of the present invention, the environment comprising three levels of a building, a ground level, first level and second level.

## Detailed Description of the Drawings

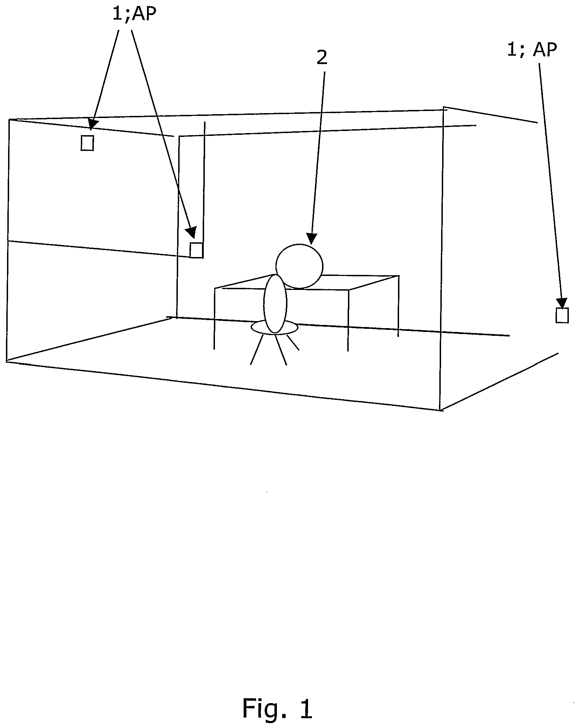

An overall concept of preferred embodiments according to the present invention is indicated in Fig. 1 which shows a room being configured with a wireless local area network (WLAN) having transceivers, i.e. a device comprising a transmitter (TX) for transmitting and receiver (RX) for receiving electromagnetic radiation. The transceivers 1 constitute access points (AP) in the WLAN.

Fig. 1 shows a room with four walls, a floor and a ceiling. Inside the room there is a table, a computer 2 and a chair. Some of the major construction elements of the chair are assumed to be metallic. At the midpoint between the two upper left corners of the room, is positioned a Wireless Local Area Network (WLAN) Access Point (AP) 1. Furthermore, an AP 1 is positioned at the midpoint of the nearest left wall, and in the rightmost corner, a short distance above the floor. The WLAN is designed such that the APs 1 can communicate, and furthermore the computer 2, also denoted a client, can communicate with one or more of the APs 1. It is to be understood that the APs 1 can be placed in many different ways, and the above is an example.

Within the room a computer 2, also denoted a client, is present, which computer 2 comprises a transceiver enabling data communication with a server via the transceivers 1. Furthermore, three transceivers 1 and thereby three access points (AP) are present in the room as shown in Fig. 1.

It is noted that the WLAN is preferably of the known and ordinary type, but it is contemplated that transmitters, receivers of the Bluetooth type or the like technology or transceivers dedicated surveillance purposes may be applied in connection with the present invention.

When the WLAN is used for surveillance in accordance with the present invention, the WLAN is operated in two different modes: Mode 1 and Mode 2.

Initially one of several Mode 1 and Mode 2 regimes is described.

In Mode 1, a set of packets is transmitted from a transceiver 1. The number of packets in the set are preferably transmitted during a time window having a predetermined length, $T_1$ seconds. It is contemplated that the packets contain information on the transmitted signal parameters (e.g. signal strength, polarization, spectrum, etc.). Upon receipt of the packets by the transceiver 1, the strength, and/or other signal parameters, of each packet is detected, recorded and stored, possibly together with the information on the signal strength, or the signal parameters, by which each packet was transmitted, thereby establishing a Mode 1 vector comprising, for each package in the set, the transmitted and the received signal strengths or the signal parameters. Thus the Mode 1 establishes a reference model.

Following this Mode 1, which may be characterised as determining a reference for comparison, Mode 2 is carried out. Basically the same steps as performed in Mode 1 are carried out, i.e. transmitting a set of packets and receiving, detecting and recording the strengths, or the signal parameters, whereby a Mode 2 vector is established comprising, for each packet in the set, the transmitted strength, and/or other signal parameters and the received strength, or the signal parameters. Thus the Mode 2 establishes the current model.

The Mode 1 and Mode 2 might be defined within a selection of regimes defined by the movement of Mode 1 and Mode 2 time windows. In the following are given three examples of regimes, but many alternative regimes are possible.

Assume the following:

$n$: A counter assuming the values $n= 0,1,2,...$ For each increment of n, a test is carried out between the reference model and the current model, to detect if en event has happened.

$M1$: The number of packets transmitted in the Mode 1 window.

$M2$: The number of packets transmitted in the Mode 2 window.

$m1(n)$: The highest packet number in the Mode 1 window, with counter n.

$m2(n)$: The highest packet number in the Mode 2 window, with counter n.

$dm1$: The number of packets the Mode 1 window is moved, when incrementing n by 1.

$dm2$: The number of packets, the Mode 2 window is moved, when incrementing n by 1.

Then the time instances $t_n$ of the Mode 1 and Mode 2 windows packets, are determined as follows:

Initialize: $m1(-1)=M1$ and $m2(-1)=M1+M2$.

Begin for $n=0,1,2,...$ Counter for comparing the reference model and the current model.

$$m1(n)=m1(n-1) + dm1 \times n$$

The time instances of the Mode 1 window packets, used in the Mode 1 model, are:

$$t_{m1-M1+1} < ... < t_{m1}$$

$$m2(n)=m2(n-1) + dm2 \times n$$

The time instances of the Mode 2 window packets, used in the Mode 2 model, are:

$$T_{m2-M2+1} < ... < t_{m2}$$

Endfor n

Then the following regimes are obtained, by selecting the corresponding parameter values.

- A fixed Mode 1 window and block movement of the Mode 2 window is obtained by: $M1>0$, $M2>0$, $dml=0$, $dm2=M2$.
- A block movement of the Mode 1 window and block movement of the Mode 2 window is obtained by: $M1>0$, $M2>0$, $dm1=M1$, $dm2=M2$.
- A sliding movement of the Mode 1 window and single packet movement of the Mode 2 window is obtained by: $M1>0$, $M2=1$, $dm1=1$, $dm2=1$. The Mode 2 window consists of just one packet.

It is noted, that in a WLAN operated to continuously transmit packets, the sets considered above may be defined by only recording information on the strengths, and/or the other signal parameters in the given time windows.

The information contained in the Mode 1 and Mode 2 vectors is now analysed to identify any significant difference between them. If a significant difference is identified, this is an indication that an event influencing the transmission of electromagnetic radiation occurred after Mode 1 was initiated and before Mode 2 was completed.

Another advantageous effect of the present invention may be obtained by tuning the system to identify specific events. This is done by analysing the effect a known event has on the Mode 2 vector and storing this information for later on the fly comparison for identification.

Furthermore, one could easily consider to embody the system in a manner where the Mode 1 vector is obtained in advance and under predetermined known conditions whereby any difference to such known conditions would be reflected in the Mode 2 vector. Furthermore, there is referred to the selection of the regimes of Mode 1 and Mode 2 windows.

Furthermore, the invention may also be embodied as a system utilising detection of changes in a carrier wave like signal, that is transmission of a continuous wave by one of the transmitters. Alternatively the invention may also be embodied as a system utilizing detection of changes in the transmission of short time impulses. In such systems, the receiver detects, in Mode 1, the signal in a first time window and performs for instance an integration over time of the received signal or estimated signal parameter properties (e.g. signal strength, polarization, spectrum, etc.). In Mode 2, the same procedure is applied and the signal is integrated or the signal parameter properties (e.g. signal strength, polarization, spectrum, etc.) are estimated. The two integrated signals or the signal parameter properties are then compared to each other and if a difference is found, an indication of a change in the volume of interest is detected.

The transceivers 1 are connected via wires to a server. Alternatively they might connect wirelessly to the server. The purpose of the server is to control the transceivers 1 and to perform the data-processing. The data-processing comprises outputting to the transceivers 1 information on which signal to be transmitted and perform the comparison of the signals received, from transceivers 1 which are access points or transceiver 2 which is a client, during Mode 1 and Mode 2. It should, however, by noted that the data-processing may be made an integral part of the functioning of the transceivers 1 and 2.

Considering the above, the invention may in general be seen to be represented by the following items:

A 3D physical environment of interest which in the following is denoted Volume of Interest (VOI). The physical material in VOI, if any, is represented by the spatial position dependence of the constitutive relations of the Maxwell equations, where the physical material is characterized by the material parameters permittivity $\varepsilon$, permeability $\mu$ and conductivity $\sigma$. One such example may be: The VOI can be the interior of a house, including the nearest outdoor environment of the house.

An event within the VOI is characterised by a change in one or more of the physical material parameters, within a finite time window. This means that $\varepsilon=\varepsilon$(spatial position, time), $\mu=\mu$(spatial position, time) and $\sigma=\sigma$(spatial position, time), where the spatial position is within the VOI. One such example may be: A person moves from one room in a house to another, by walking through the former room then opening a door and walking into the latter room and finally closing the door.

The position of an event is the spatial position of the changed material parameters within the VOI. Examples may be: The instantaneous spatial position of a person, walking around in a house or the position of a door being opened.

The surveillance or detection system components are denoted GE, TM, TX, RX and DT where:

- GE is a generator which delivers data sequences, to be transmitted by the electromagnetic wave transmitter TX.
- TM is the transmission mode: Either through an electromagnetic carrier frequency or electromagnetic impulses.
- TX is an electromagnetic wave transmitter, working either at a carrier frequency f or by transmitting impulses. The transmitter is equipped with an antenna.
- RX is an electromagnetic wave receiver, receiving at the carrier frequency f or wide band if electromagnetic impulses are used. The receiver is equipped with an antenna.
- DT is a data sequence detector connected with RX. DT works in two modes. In Mode 1, a reference model estimated from the received signal strength or the said signal parameters at the carrier frequency or the received impulses of the propagation paths from TX to RX, is estimated. In Mode 2 it is tested, if the current signal strengths or the signal parameters received through the propagation paths, the current model, deviate from the reference model estimated in Mode 1. These models are based on methods available within the area of signal processing and statistics.

Furthermore, the combination of GE and DT can work in four different function cases, denoted GE_DT_1 to GE_DT_4. They represents four different combinations of data communication and/or surveillance systems. The four cases are determined by the capabilities of the GE, having completely control of the communication mode and the data sequence (DS) transmitted or not; and the capability of DT to carry out feed-back to GE, dependent on the received DS, and its associated parameters, e.g. strength, polarization, spectrum.

This leads to the following:

GE_DT_1: GE does not have completely control of the DS. DT does not have feed-back capability to GE, dependent on the received DS. This system carries out a combination of data communication and surveillance, without the option of adapting the surveillance function dependent on the result of the surveillance.

GE_DT_2: GE does have completely control of the DS. DT does not have feed-back capability to GE, dependent on the received DS. This system has the option of dividing the communication resources among data communication and surveillance, without the option of adapting the surveillance function dependent on the result of the surveillance.

GE_DT_3: GE does not have completely control of the DS. DT does have feed-back capability to GE, dependent on the received DS. This system carries out a combination of data communication and surveillance, with the option of adapting a part of the communication resources to surveillance, e.g. dependent on the result of the surveillance.

GE_DT_4: GE does have completely control of the DS. DT does have feed-back capability to GE, dependent on the received DS. This system has the option of dividing the data communication into use for communication and surveillance, with the option of adapting the communication capacity, e.g. depending on the result of the surveillance. Thus this system can change function mode from a situation where nearly all the communication capacity is used for data communication into a situation where all the capacity is allocated for surveillance.

Thus, a surveillance system may preferably comprise a volume of interest (VOI), in which a transmitter (TX) and a receiver (RX) are mounted in known spatial positions. One example of the operation of the surveillance system for event detection is as follows: In Mode 1, the detector DT estimates, through the time period $T_{start}$ to $T_{stop} = T_{start} + T_1$, the received signal parameter statistics of the GE data sequence, e.g. signal strength, polarization, spectrum, etc., transmitted from TX to RX via electromagnetic wave propagation paths. Then at time $T_{stop}$ the detector is switched from Mode 1 to Mode 2, where deviation of the received signal statistics from that, estimated in Mode 1 is tested. If a deviation is found, then an event is detected within the VOI.

A surveillance system is thus, preferably, represented by the quintuple {GE,TM,TX,RX,DT}, where the said components are defined above.

The propagation paths from TX to RX comprises two parts: The line of sight (LOS) propagation path, which is the shortest straight line path from TX to RX and the multipath (MP) propagation from TX to RX, where the electromagnetic waves have been reflected or refracted at least one time. It is noted that a design principle for TX, RX pairs, targeted for combining data communication and VOI surveillance, might be based on a principle of minimizing the influence of multipath for the communication part and maximizing the influence of multipath for the VOI surveillance part.

A complete surveillance or detection system is then a covering of the volume of interest with a set of surveillance systems {GE,TM,TX,RX,DT} with known positions. They are in the following represented by $\{GE_{i,j}, TM_{j,k}, TX_j, RX_k, DT_{m,k}\}$ where:

i=1,2,...,$NG_j$ (the number of generators of transmitter j)
j=1,2,...,$N_T$ (the number of transmitters)
k=1,2,...,$N_R$ (the number of receivers)
m=1,2,...$ND_k$ (the number of detectors of receiver k).

It is noted that each transmitter might have several generators; that the transmission mode might be dependent on the specific TX RX pair, and thus spatial dependent and that each receiver might have several detectors.

In the case where the transmission mode is based on a carrier frequency, the electromagnetic wave carrier frequency of TX is selected as a compromise between frequencies, which are sensitive to an event and frequencies which are technologically feasible. To obtain a shadow effect of a human being, also denoted a fade in the transmission from TX to RX, it is desirable with a carrier frequency not smaller than 1 GHz. Frequencies lower than 400 MHz mainly pass through the human body and frequencies higher than 3GHz are completely reflected by the human body.

Any transmitter, receiver pair, where the receiver can determine the received signal strength of a known transmitted signal sequence with known strength, can embody the surveillance system.

An example of a preferred embodiment of a surveillance system according to the present invention utilises a Wireless Local Area Network (WLAN), exemplified by [IEEE 802.11, 1997]. In the following, the definitions related to WLAN are based on that standard.

The embodiment of the surveillance or detection system utilises the following WLAN elements:

- Access Point (AP) [IEEE 802.11, 1997] p. 3, comprising a transmitter AP-TX part and a receiver AP-TX part.
- Channel (CH) [IEEE 802.11, 1997] p. 3.
- RXVECTOR parameters [IEEE 802.11, 1997] p. 181, with

Received Signal Strength Indicator (RSSI), which is an optional parameter that has a value of 0 - $RSSI_{max}$. This parameter is a measure by the PHY sublayer, of the energy observed at the antenna used to receive the current PPDU. The RSSI is measured between the beginning of the start frame delimiter (SFD) and the end of the PLCP header error check (HEC). Thus the energy measurement of RSSI is according to [IEEE 802.11, 1997] p. 183, Fig. 70, and is defined by the SFD (16 bit) + PLW (12 bit) + PSF (4 bit) + HEC (16 bit), in total 48 bit.

A surveillance or detection system is embodied as follows:

- GE≡Data sequence generator of PPDU, embodied in the computer associated with $AP_1$-TX.
- TX≡$AP_1$-TX, mounted in a fixed, known position in VOI.
- RX≡$AP_2$-RX, mounted in a fixed, known position in VOI or RX ≡ Client - RX mounted in a fixed, known position.
- DT≡Detection algorithm embodied in the computer associated with the client.
- $S_1(t_n)$≡Value of RSSI at time $t_n$.

The DT-algorithm performs the following steps, in the GE_DT_1 function case:

Mode 1: Acquisition of $\{S_1(t_n)\}$ during the time window $T_{start}$ to $T_{start}+T_1$,
and switch at time $T_{start}+T_1$ into Mode 2.
Mode 2: Repeat

Acquisition of $\{s_s(t_n)\}$ during the time window $T+T_1$.
Perform a Kolmogorov-Smirnov statistical test of identity of the empirical distribution function obtained during Mode 2 on $\{s_s(t_n)\}$, with the function obtained during the Mode 1 on $\{S_1(t_n)\}$ using a threshold TH.
If the empirical distributions are different according to the said threshold TH then an event is detected.
End Repeat.

It is to be understood that many alternative detection functions and tests can be used.

If the WLAN performs both standard data communication and surveillance, the compound system is denoted a Multimodal WLAN or a Multifunction WLAN. In general a network performing this function will be denoted a Multimodal Network.

An improvement is the application of a Surveillance Anchoring Access Points (SAAP), positioned close to the floor in an indoor site and ordinary WLAN APs or fixed mounted WLAN clients placed in the usual positions. APs or fixed mounted WLAN clients might be used for SAAPs thus used solely for surveillance.

Another improvement is to enhance the VOI sensitivity with respect to surveillance, by embedding light metal structures in the construction elements, which might be critical with respect to surveillance, such as doors.

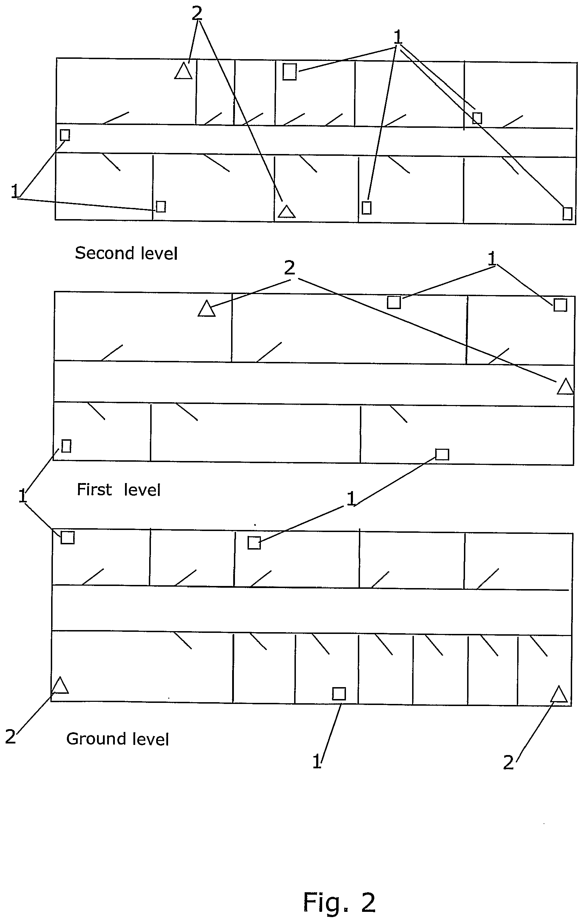

Fig. 2 shows an example with three levels of a building, a ground level, first level and second level. The building is in the usual way consisting of rooms, pathways, doors etc. The buildings three levels are covered by a combination of WLAN Access Points (APs) 1 (shown as squares) and WLAN clients 2 (shown as triangles), all mounted in fixed positions in the building. The APs 1 might communicate with each other, and they are preferably connected through a fixed wired network using standard systems. The WLAN clients 2 communicate with those APs 1, which are within the communication range of the clients 2. The surveillance is carried out by detecting changes in the said received signal strengths or signal parameters (e.g. polarization, spectrum) between the clients 2 and APs 1 and between the APs 1. It is noted that AP 1 and clients 2 may communicate across different floors.

**Localized Surveillance**

It is foreseen that the complete surveillance system may be extended into localized surveillance. The objective of localized surveillance is to combine data communication between transmitter, receiver pairs, with a priori physical model information of the volume of interest (VOI), into a determination of the approximate physical position of reflection changes, if any, for some of the major reflection points in the volume of interest. A change might e.g. be the opening and closing of a door, which contains metallic parts of a size sufficient for detecting its change of position.

It is assumed that the volume of interest (VOI) is covered by the complete surveillance system. It is furthermore assumed that the VOI is represented by a physical model, which describes the geometrical position of the materials within the VOI. If, e.g., the VOI contains a building, then the physical model might be represented by the computer aided information base, which is the blueprint of the building, describing the placement of all construction materials and the type of materials used. This model is in the following referred to as the physical model of the volume of interest. It is also assumed that the transmitters, belonging to the complete surveillance system, transmit a signal, known in advance to the receivers belonging to the complete surveillance system. A receiver can then determine the time instances in the received signal, where the transmitted signal is received along a path containing environment reflector, e.g. by using cross correlation between the known transmitted signal and the received signal. Assuming that the geometrical positions of the transmitters and receivers are known and fixed within the volume of interest, it is possible to compute the transmission delay from any transmitter to any receiver. Furthermore it is assumed that a receiver (RX) receives a signal from a transmitter (TX) along the shortest straight line joining them. This is the so-called line of sight (LOS). The signal received along the LOS, is the first signal received in the receiver. All other signals from the transmitter will arrive later to the receiver. The transmission time for a signal received along one of the paths with reflectors, assuming only one reflection on the path, is determined as the sum of the transmission time along LOS and the time difference between the received path signal and the LOS signal. This latter difference can be determined in the receiver, e.g. using cross correlation. Knowing the transmission time from a transmitter (TX) to a reflector belonging to the volume of interest and further to a receiver (RX), together with the known positions of the TX and RX, characterizes the rotational symmetrical ellipsoid surface on which the reflector is residing, for a given pair of transmitter and receiver. The focus points of the ellipsoid are the positions of the receiver and the transmitter, and the geometrical distance from a focus point to the surface of the rotational symmetrical ellipsoid and further to the other focus point, is the above transmission time from the transmitter to a reflector and further to a receiver multiplied by the speed of light.

Assuming that the volume of interest contains only one reflector, then for each transmitter (TX) and receiver (RX) pair this reflector resides on the rotational symmetrical ellipsoid surface, provided the reflector is within the range of the TX,RX pair. The position of the reflector is then found by solving for the coordinates in the 3D space of the intersections between the ellipsoids obtained from all TX,RX pairs in the VOI.

Now, assuming that the volume of interest contains a composite physical object, e.g. a building, represented by the physical model, then the positions of the major reflectors are determined as follows. It is assumed that all physical objects are stationary, which means that no reflectors are changing position within the volume of interest. Then the positions of the transmitter, receiver pairs, together with the cross correlation of the transmitted and received signals and the physical model of the volume of interest, are used for a combination of combinatorial search and numerical optimization for determining the reflection points positions.

A more detailed description of Localized Surveillance is made in the following.

It is assumed that the volume of interest (VOI) is covered by a complete surveillance system as follows:

- Set of transmitters $TX_j$ where $j=1,2,...,N_T$. $N_T$ is the number of transmitters.
- Positions of transmitters within the VOI

$$\mathbf{pt}_j=(ptx_j,pty_j,ptz_j), \text{ where } j=1,2,...,N_T.$$

- Set of receivers $RX_i$, where $i=1,2,...,N_R$. $N_R$ is the number of receivers.
- Positions of receivers within the VOI

$$\mathbf{pr}_i=(prx_i,pry_i,prz_i), \text{ where } i=1,2,...,N_R.$$

- $D_{i,j}$ is the geometrical distance between the receiver $RX_i$ and transmitter $TX_j$, where $i=1,2,...,N_R$ and $j=1,2,...,N_T$.

c is the speed of light in meter/second.

$r_{i,j}(k)$ is the cross correlation between the signal transmitted from transmitter $TX_j$ and the signal received in receiver $RX_i$, where k is the lag of the cross correlation.

The time increment of the cross correlation function, corresponding to an increment of the lag k by 1 corresponds to an increment of T seconds.

The lowest value of $k=k_0$, where $|r_{i,j}(k)| > w_{noise}$ and where $w_{noise}$ is a noise threshold, is the time delay corresponding to receiving the signal along the line of sight (LOS) path from the transmitter $(TX_j)$ to the receiver $(RX_i)$, assuming that communication along LOS is possible. A value of $k=k_n$ and $k_n>k_0$ where $|r_{i,j}(k_n)| > w_{noise}$ corresponds to one or more multipath propagation delay from the transmitter $TX_j$ to reflector in the VOI and further to the receiver $RX_i$. The geometrical length of this path, $L_{i,j}$, is determined by $L_{i,j}(m)=D_{i,j} + cT(k_n - k_0)=D_{i,j} + dm$, where $d=cT$ is the spatial resolution of the receiver, and $m=k_n - k_0$.

A path where $|r_{i,j}(k)| > w_{noise}$ is said to belong to a major reflection point.

The rotational symmetrical ellipsoid surface, where a reflector is residing, determined by $TX_j$ and $RX_i$, is denoted $E_{i,j}(\mathbf{x},m)=0$, where $\mathbf{x}=(x,y,z)$ is the independent spatial variables of the surface.

Assuming that the volume of interest does only contain 1 reflector, and that there are used $N_T$ transmitters and $N_R$ receivers, then the position of the reflector $\mathbf{r} = (r_x,r_y,r_z)$ is found by solving the following nonlinear problem:

$$\mathbf{r} = \arg(\mathbf{x}) \min \Sigma_i \Sigma_j [E_{i,j}(\mathbf{x},m)]^2, \text{ where } i=1,2,...,N_R \text{ and } j=1,2,...,N_T$$

and m is the cross correlation lag difference corresponding to the path in the respective cross correlation functions.

Now, assuming that the volume of interest contains a composite physical object, e.g. a building, then the determination of the locations of the major reflection points are determined as follows. For each pair of $TX_j$ and $RX_i$, the

cross correlation between the received signal and the reference signal is determined as $r_{i,j}(m)$, where m is defined above. Furthermore for each pair of $TX_j$ and $RX_i$, it is possible to determine the positions of the major physical model reflectors of relevance to this pair, because the positions of $TX_j$ and $RX_i$ are known.

A framework for identifying the positions of the major reflection points, is as follows:

The positions of the reflectors might be found using a selection of methods. It is suggested to use a combination of combinatorial search on sets of reflections and numerical optimization to find the numerical values of the reflection positions. The search is controlled in combination by the reflections and the physical model of the volume of interest. For a stationary reflecting volume of interest, this solution might then be used repeatedly, for testing deviation from stationarity and the positions within volume of interest, where the deviations happens.

It is to be understood that the cross correlation can be substituted with other methods for time delay estimation.

## Long Term Analysis of Volume of Interest

Furthermore it is foreseen to use a complete surveillance system for a volume of interest (VOI) for long term analysis of the VOI, using the fixed Mode 1 window and block movement of the Mode 2 window, under the assumption that the VOI physical model is unchanged.

Using all measurements in the complete surveillance system fixed Mode 1 window in a model A and comparing to all the measurements in the complete surveillance system Mode 2 block moving window in a Model B can be used for detection of major changes in the material of the VOI, by comparing Model A and Model B.

## Families of Surveillance Systems

At least four families of surveillance systems are contemplated, which all might be preferably embodied by use of: Custom designed hardware, WLAN, Bluetooth or the like.

- Function: Event detection within the volume of interest (VOI).
- Function: Event detection within the VOI and data communication.
- Function: Event detection including positioning of the event within the VOI.
- Function: Event detection including positioning of the event within the VOI and data communication.

## The Terminology Used in Connection with the Present Invention Comprises

| | |
|---|---|
| AP: | Access Point of Wireless Local Area Network. |
| DS: | Data sequence. |
| DT: | Detector. |
| HEC: | Header error check. |
| PLCP: | Physical Layer Convergence Protocol, [IEEE 802.11, 1997] p. 8. |
| PLW: | Length of PSDU. |
| PPDU: | PLCP Protocol Data Unit. |
| PSF: | PLCP Signalling Field. |
| PSDU: | PLCP SDU. |
| RSSI: | Received Signal Strength Index. |
| RX: | Receiver. |
| SAAP: | Surveillance Anchoring Access Point of Wireless Local Area Network. |
| SDU: | Service Data Unit. |
| SFD: | Start frame delimiter. |
| TH: | Threshold in Event Detector. |
| TX: | Transmitter. |
| WLAN: | Wireless Local Area Network. |
| $\varepsilon$: | permittivity, |
| $\mu$: | permeability |
| $\sigma$: | conductivity |

## The Following References Referenced Herein

[IEEE 802.11, 1997] is IEEE Std. 802.11-1997, Part 11: Wireless LAN Medium Access Control (MAC) and Physical Layer (PHY) Specification.

**Claims**

1.  A surveillance system (1,2) comprising at least one transmitter, each being adapted to transmit an electromagnetic signal, and at least one receiver, each being adapted to receive an electromagnetic signal, said system being further adapted to:

    - transmit, by use of one of the at least one transmitters, a first electromagnetic signal and a second electromagnetic signal, the second signal is succeeding the first signal,
    - receive said first and second electromagnetic signals, by use of one of the at least one receivers,

    the system further comprising means for comparing the received first signal and the received second signal in order to detect a difference, if present, in said two signals, said difference being caused by a physical change present in the signal path between at least one of the transmitting transmitters and at least one of the receiving receivers, said change occurring between initiation of transmittal of the first signal and termination of the receipt of the second signal, **characterised in that**, the transmitter(s) and the receiver(s) are components of a wireless network which transmitter(s) and receiver(s) are used both for data transmission and for transmitting and receiving said first and second signals.

2.  A surveillance system according to of claim 1, wherein the comparing means is adapted to detect a difference in signal strength between the first received signal and the second received signal.

3.  A surveillance system according to any of claims 1-2, wherein the comparing means comprises processing means for processing the first and/or the second received signal(s) before comparing them, the comparison being performed on the basis of the processed signals.

4.  A surveillance system according to any of claims 1-3, wherein the transmitter(s) is/are adapted to transmit the first signal during a pre-selected first time window and to transmit the second signal during a pre-selected second time window.

5.  A surveillance system according to any of claims 1-4, wherein each of the signals transmitted is a constant signal, such as a carrier wave or a carrier wave like.

6.  A surveillance system according to any of claims 1-4, wherein each of the signals transmitted is an impulse, or an impulse like signal.

7.  A surveillance system according to any of claims 1-6, wherein the transmitter(s) is/are adapted to transmit the first and the second signals as a first and a second set of packets of electromagnetic radiation, and wherein the receiver(s) is/are adapted to receive the first and second sets of packets.

8.  A surveillance system according to claim 7, wherein the comparing means is adapted to compare the statistics on the signal strength of each packet to identify differences between the energy contents of the first and the second set of packets.

9.  A surveillance system according to claim 7 or 8, wherein the comparing means is adapted to compare the signal parameters, such as polarization, spectrum and/or delay of each packet, so as to identify differences between the parameters of the first and the second set of packets.

10. A surveillance system according to claim 1, wherein the wireless network is a wireless local area network used for data transmission.

11. A surveillance system according to any of claims 1-10, wherein at least one transmitter and at least one receiver are combined into a transceiver.

12. A surveillance system according to any of claims 1-11, wherein the comparing means is adapted to compare the detected difference to at least one known value, so as to identify the physical change causing the difference.

**13.** A surveillance system according to any of claims 1-12, further comprising means for collecting and storing previously obtained information relating to a plurality of compared signals, and means for comparing said information in order to allow for evaluation of a temporal development of the obtained information.

**14.** A surveillance system according to any of claims 1-13, further comprising means for determining the position of physical changes in the volume of interest.

**15.** A surveillance method, the method utilising at least one transmitter, each being adapted to transmit an electromagnetic signal, and at least one receiver, each being adapted to receive an electromagnetic signal, the method comprising the steps of:

- transmit, by use of one of the at least one transmitters, a first electromagnetic signal and a second electromagnetic signal, the second signal is succeeding the first signal,
- receive said first and second electromagnetic signals, by use of one of the at least one receivers,
- comparing the received first signal and the received second signal in order to detect a difference, if present, in said two signals, said difference being caused by a physical change present in the signal path between at least one of the transmitting transmitters and at least one of the receiving receivers, said change occurring between initiation of transmittal of the first signal and termination of the receipt of the second signal,

**characterised in that**, the transmitter(s) and the receiver(s) are components of a wireless network which transmitter(s) and receiver(s) are used both for data transmission and for transmitting and receiving said first and second signals.

**16.** A method according to claim 15, wherein the comparing step comprises detecting a difference in signal strength between the first received signal and the second received signal.

**17.** A method according to any of claims 15-16, wherein the comparing step comprises processing the first and/or the second received signal(s) before comparing them, the comparison being performed on the basis of the processed signals.

**18.** A method according to any of claims 15-17, wherein the first signal is transmitted during a pre-selected first time window and the second signal is transmitted during a pre-selected second time window, said first and second time windows preferably having equal duration.

**19.** A method according to any of claims 15-18, wherein each of the signals transmitted is a constant signal, such as a carrier wave or a carrier wave like.

**20.** A method according to any of claims 15-18, wherein each of the signals transmitted is an impulse, or an impulse like signal.

**21.** A method according to any of claims 15-20, wherein the steps of transmitting a first and a second signal are performed by transmitting a first and a second set of packets of electromagnetic radiation, and wherein steps of receiving the first and the second signals are performed by receiving the first and second sets of packets.

**22.** A method according to claim 21, wherein the comparing step comprises comparing the statistics on the signal strength of each packet to identify differences between the energy contents of the first and the second set of packets.

**23.** A method according to claim 21 or 22, wherein the comparing step comprises comparing the signal parameters, such as polarization, spectrum and/or delay of each packet, so as to identify differences between the parameters of the first and the second set of packets.

**24.** A method according to claim 15, wherein the wireless network is a wireless local area network used for data transmission.

**25.** A method according to any of claims 15-24, wherein the first and second signals are transmitted and received by one or more transceivers.

**26.** A method according to any of claims 15-25, wherein the comparing step comprises comparing the detected difference to at least one known value, so as to identify the physical change causing the difference.

27. A method according to any of claims 15-26, further comprising the steps of:

- collecting and storing previously obtained information relating to a plurality of compared signals, and
- comparing said information in order to allow for evaluation of a temporal development of the obtained information.

28. A method according to any of claims 15-27, further comprising the step of determining the position of physical changes in the volume of interest.

**Patentansprüche**

1. Überwachungssystem (1, 2), umfassend mindestens einen Sender, wobei jeder dazu ausgelegt ist, um ein elektromagnetisches Signal zu übertragen, und mindestens einen Empfänger, wobei jeder dazu ausgelegt ist, um ein elektromagnetisches Signal zu empfangen, wobei das System ferner ausgelegt ist zum:

- Übertragen, unter Verwendung von einem des mindestens einen Senders, eines ersten elektromagnetischen Signals und eines zweiten elektromagnetischen Signals, wobei das zweite Signal auf das erste Signal folgt,
- Empfangen des ersten und zweiten elektromagnetischen Signals unter Verwendung von einem des mindestens einen Empfängers,

wobei das System ferner ein Mittel zum Vergleichen des empfangenen ersten Signals und des empfangenen zweiten Signals umfasst, um einen Unterschied, falls vorhanden, in den beiden Signalen zu detektieren, wobei der Unterschied durch eine physische Änderung hervorgerufen wird, die in dem Signalweg zwischen mindestens einem der übertragenden Sender und mindestens einem der empfangenden Empfänger vorhanden ist, wobei die Änderung zwischen der Einleitung der Übertragung des ersten Signals und der Beendigung des Empfangs des zweiten Signals auftritt, **dadurch gekennzeichnet, dass** der/die Sender und der/die Empfänger Komponenten eines drahtlosen Netzes sind, wobei der/die Sender und Empfänger sowohl zur Datenübertragung als auch zum Senden und Empfangen des ersten und zweiten Signals verwendet werden.

2. Überwachungssystem nach Anspruch 1, wobei das Vergleichsmittel dazu ausgelegt ist, um einen Unterschied in der Signalstärke zwischen dem ersten empfangenen Signal und dem zweiten empfangenen Signal zu detektieren.

3. Überwachungssystem nach einem der Ansprüche 1-2, wobei das Vergleichsmittel ein Verarbeitungsmittel zum Verarbeiten des ersten und/oder zweiten empfangenen Signals umfasst, bevor sie verglichen werden, wobei der Vergleich auf der Grundlage der verarbeiteten Signale durchgeführt wird.

4. Überwachungssystem nach einem der Ansprüche 1-3, wobei der/die Sender dazu ausgelegt ist/sind, um das erste Signal während eines vorausgewählten ersten Zeitfensters zu übertragen und das zweite Signal während eines vorausgewählten zweiten Zeitfensters zu übertragen.

5. Überwachungssystem nach einem der Ansprüche 1-4, wobei jedes der übertragenen Signale ein konstantes Signal ist, wie zum Beispiel eine Trägerwelle oder eine Trägerwellenentsprechung.

6. Überwachungssystem nach einem der Ansprüche 1-4, wobei jedes der übertragenen Signale ein Impuls oder ein impulsähnliches Signal ist.

7. Überwachungssystem nach einem der Ansprüche 1-6, wobei der/die Sender dazu ausgelegt ist/sind, um das erste und das zweite Signal als einen ersten und einen zweiten Satz von Paketen elektromagnetischer Strahlung zu übertragen, und wobei der/die Empfänger dazu ausgelegt ist/sind, um den ersten und zweiten Satz von Paketen zu empfangen.

8. Überwachungssystem nach Anspruch 7, wobei das Vergleichsmittel dazu ausgelegt ist, um die Statistiken der Signalstärke jedes Pakets zu vergleichen, um Unterschiede zwischen den Energiegehalten des ersten und des zweiten Satzes von Paketen zu identifizieren.

**9.** Überwachungssystem nach Anspruch 7 oder 8, wobei das Vergleichsmittel dazu ausgelegt ist, um die Signalparameter, wie zum Beispiel Polarisierung, Spektrum und/oder Verzögerung jedes Pakets, zu vergleichen, um Unterschiede zwischen den Parametern des ersten und des zweiten Satzes von Paketen zu identifizieren.

**10.** Überwachungssystem nach Anspruch 1, wobei das drahtlose Netz ein drahtloses lokales Netz ist, das zur Datenübertragung verwendet wird.

**11.** Überwachungssystem nach einem der Ansprüche 1-10, wobei mindestens ein Sender und mindestens ein Empfänger zu einem Sendeempfänger kombiniert werden.

**12.** Überwachungssystem nach einem der Ansprüche 1-11, wobei das Vergleichsmittel dazu ausgelegt ist, um den detektierten Unterschied mit mindestens einem bekannten Wert zu vergleichen, um die physische Änderung zu identifizieren, welche den Unterschied hervorruft.

**13.** Überwachungssystem nach einem der Ansprüche 1-12, ferner umfassend ein Mittel zum Sammeln und Speichern von bereits erhaltenen Informationen in Bezug auf eine Vielzahl von verglichenen Signalen und ein Mittel zum Vergleichen der Informationen, um die Bewertung der zeitlichen Entwicklung der erhaltenen Informationen zu ermöglichen.

**14.** Überwachungssystem nach einem der Ansprüche 1-13, ferner umfassend ein Mittel zum Bestimmen der Position von physischen Änderungen in dem relevanten Volumen.

**15.** Überwachungsverfahren, wobei das Verfahren mindestens einen Sender, wobei jeder dazu ausgelegt ist, um ein elektromagnetisches Signal zu übertragen, und mindestens einen Empfänger, wobei jeder dazu ausgelegt ist, um ein elektromagnetisches Signal zu empfangen, einsetzt, wobei das Verfahren die folgenden Schritte umfasst:

- Übertragen, unter Verwendung von einem des mindestens einen Senders, eines ersten elektromagnetischen Signals und eines zweiten elektromagnetischen Signals, wobei das zweite Signal auf das erste Signal folgt,
- Empfangen des ersten und zweiten elektromagnetischen Signals unter Verwendung von einem des mindestens einen Empfängers,
- Vergleichen des empfangenen ersten Signals und des empfangenen zweiten Signals, um einen Unterschied, falls vorhanden, in den beiden Signalen zu detektieren, wobei der Unterschied durch eine physische Änderung hervorgerufen wird, die in dem Signalweg zwischen mindestens einem der übertragenden Sender und mindestens einem der empfangenden Empfänger vorhanden ist, wobei die Änderung zwischen der Einleitung der Übertragung des ersten Signals und der Beendigung des Empfangs des zweiten Signals auftritt,

**dadurch gekennzeichnet, dass** der/die Sender und der/die Empfänger Komponenten eines drahtlosen Netzes sind, wobei der/die Sender und Empfänger sowohl zur Datenübertragung als auch zum Senden und Empfangen des ersten und zweiten Signals verwendet werden.

**16.** Verfahren nach Anspruch 15, wobei der Vergleichsschritt Detektieren eines Unterschieds in der Signalstärke zwischen dem ersten empfangenen Signal und dem zweiten empfangenen Signal umfasst.

**17.** Verfahren nach einem der Ansprüche 15-16, wobei der Vergleichsschritt Verarbeiten des ersten und/oder zweiten empfangenen Signals umfasst, bevor sie verglichen werden, wobei der Vergleich auf der Grundlage der verarbeiteten Signale durchgeführt wird.

**18.** Verfahren nach einem der Ansprüche 15-17, wobei das ersten Signal während eines vorausgewählten ersten Zeitfensters übertragen wird und das zweite Signal während eines vorausgewählten zweiten Zeitfensters übertragen wird, wobei das erste und zweite Zeitfenster vorzugsweise eine gleiche Dauer aufweisen.

**19.** Verfahren nach einem der Ansprüche 15-18, wobei jedes der übertragenen Signale ein konstantes Signal ist, wie zum Beispiel eine Trägerwelle oder eine Trägerwellenentsprechung.

**20.** Verfahren nach einem der Ansprüche 15-18, wobei jedes der übertragenen Signale ein Impuls oder ein impulsähnliches Signal ist.

**21.** Verfahren nach einem der Ansprüche 15-20, wobei die Schritte des Übertragens eines ersten und eines zweiten Signals durch Übertragen eines ersten und eines zweiten Satzes von Paketen elektromagnetischer Strahlung durchgeführt werden und wobei die Schritte des Empfangens des ersten und des zweiten Signals durch Empfangen des ersten und zweiten Satzes von Paketen durchgeführt werden.

**22.** Verfahren nach Anspruch 21, wobei der Vergleichsschritt Vergleichen der Statistiken der Signalstärke jedes Pakets umfasst, um Unterschiede zwischen den Energiegehalten des ersten und des zweiten Satzes von Paketen zu identifizieren.

**23.** Verfahren nach Anspruch 21 oder 22, wobei der Vergleichsschritt Vergleichen der Signalparameter, wie zum Beispiel Polarisierung, Spektrum und/oder Verzögerung jedes Pakets, umfasst, um Unterschiede zwischen den Parametern des ersten und des zweiten Satzes von Paketen zu identifizieren.

**24.** Verfahren nach Anspruch 15, wobei das drahtlose Netz ein drahtloses lokales Netz ist, das zur Datenübertragung verwendet wird.

**25.** Verfahren nach einem der Ansprüche 15-24, wobei das erste und zweite Signal durch einen oder mehrere Sendeempfänger übertragen und empfangen werden.

**26.** Verfahren nach einem der Ansprüche 15-25, wobei der Vergleichsschritt Vergleichen des detektierten Unterschieds mit mindestens einem bekannten Wert umfasst, um die physische Änderung zu identifizieren, welche den Unterschied hervorruft.

**27.** Verfahren nach einem der Ansprüche 15-26, das ferner die folgenden Schritte umfasst:

- Sammeln und Speichern von bereits erhaltenen Informationen in Bezug auf eine Vielzahl von verglichenen Signalen, und
- Vergleichen der Informationen, um die Bewertung der zeitlichen Entwicklung der erhaltenen Informationen zu ermöglichen.

**28.** Verfahren nach einem der Ansprüche 15-27, ferner umfassend den Schritt des Bestimmens der Position von physischen Änderungen in dem relevanten Volumen.

**Revendications**

**1.** Système de surveillance (1,2) comprenant au moins un émetteur, chacun étant adapté pour transmettre un signal électromagnétique, et au moins un récepteur, chacun étant adapté pour recevoir un signal électromagnétique, ledit système étant adapté en outre pour

- transmettre, en utilisant un de l'au moins un transmetteur, un premier signal électromagnétique et un deuxième signal électromagnétique, le deuxième signal succédant au premier signal,
- recevoir lesdits premier et deuxième signaux électromagnétiques en utilisant un de l'au moins un récepteur,

le système comprenant en outre un dispositif pour comparer le premier signal reçu et le deuxième signal reçu dans le but de détecter une différence éventuelle entre les deux signaux, ladite différence étant causée par un changement physique présente dans le parcours de signal entre au moins un des émetteurs transmettant et au moins un des récepteurs recevant, ledit changement survenant entre le lancement de la transmission du premier signal et la cessation de la réception du deuxième signal, **caractérisé en ce que** l'(les) émetteur(s) et le(s) récepteur(s) sont des composants d'un réseau sans fil dont l'(les) émetteur(s) et le(s) récepteur(s) sont utilisés à la fois pour la transmission de données et pour la transmission et la réception desdits premier et deuxième signaux.

**2.** Système de surveillance selon la revendication 1, le dispositif de comparaison étant adapté pour détecter une différence d'intensité de signal entre le premier signal reçu et le deuxième signal reçu.

**3.** Système de surveillance selon une quelconque des revendications 1-2, le dispositif de comparaison comprenant un dispositif de traitement pour le traitement du premier et/ou du deuxième signal (signaux) reçu(s) avant de les comparer, la comparaison étant effectuée en fonction des signaux traités.

**4.** Système de surveillance selon une quelconque des revendications 1-3, l'(les) émetteur(s) étant adapté(s) pour émettre le premier signal au cours d'un premier créneau temporel présélectionné et pour émettre le deuxième signal au cours d'un deuxième créneau temporel présélectionné.

**5.** Système de surveillance selon une quelconque des revendications 1-4, chacun des signaux émis étant un signal constant, par exemple une onde porteuse ou du type onde porteuse.

**6.** Système de surveillance selon une quelconque des revendications 1-4, chacun des signaux émis étant une impulsion ou un signal du type impulsion.

**7.** Système de surveillance selon une quelconque des revendications 1-6, l'(les) émetteur(s) étant adapté(s) pour émettre le premier et le deuxième signaux en tant qu'un premier et un deuxième ensembles de paquets de rayonnement électromagnétique, et le(s) récepteur(s) étant adapté(s) pour recevoir le premier et le deuxième ensembles de paquets.

**8.** Système de surveillance selon la revendication 7, le dispositif de comparaison étant adapté pour comparer les statistiques sur l'intensité du signal de chaque paquet afin d'identifier des différences entre le contenu énergétique du premier et du deuxième ensemble de paquets.

**9.** Système de surveillance selon la revendication 7 ou 8, le dispositif de comparaison étant adapté pour comparer les paramètres de signaux, par exemple la polarisation, le spectre et/ou le retard de chaque paquet afin d'identifier des différences entre les paramètres des premier et deuxième ensembles de paquets.

**10.** Système de surveillance selon la revendication 1, le réseau sans fil étant un réseau local sans fil utilisé pour la transmission de données.

**11.** Système de surveillance selon une quelconque des revendications 1-10, au moins un émetteur et au moins un récepteur étant combinés en un émetteur-récepteur.

**12.** Système de surveillance selon une quelconque des revendications 1-11, le dispositif de comparaison étant adapté pour comparer la différence détectée avec au moins une valeur connue, de façon à identifier le changement physique causant la différence.

**13.** Système de surveillance selon une quelconque des revendications 1-12, comprenant en outre un dispositif pour la collecte et le stockage d'informations obtenues préalablement relatives à une pluralité de signaux comparés, et un dispositif pour la comparaison desdites informations afin de permettre l'évaluation d'un développement temporel des informations obtenues.

**14.** Système de surveillance selon une quelconque des revendications 1-13, comprenant en outre un dispositif pour la détermination de la position de changements physiques dans le volume concerné.

**15.** Méthode de surveillance, la méthode faisant usage d'au moins un émetteur, chacun étant adapté pour transmettre un signal électromagnétique, et au moins un récepteur, chacun étant adapté pour recevoir un signal électromagnétique, la méthode comprenant les étapes

- d'émission, à l'aide d'un des au moins un émetteur, d'un premier signal électromagnétique et d'un deuxième signal électromagnétique, le deuxième signal succédant au premier signal,
- de réception desdits premier et deuxième signaux électromagnétiques à l'aide d'un des au moins un récepteur,
- de comparaison du premier signal reçu avec le deuxième signal reçu afin de détecter une différence, le cas échéant, entre les deux signaux, ladite différence étant causée par un changement physique présent dans le parcours du signal entre au moins un des émetteurs transmettant et un des récepteurs recevant, ledit changement se produisant entre le lancement de l'émission du premier signal et la cessation de la réception du deuxième signal,

**caractérisée en ce que** l'(les) émetteur(s) et le(s) récepteur(s) sont des composants d'un réseau sans fils dont l'(les) émetteur(s) et le(s) récepteur(s) sont utilisés à la fois pour la transmission de données et pour la transmission et la réception desdits premier et deuxième signaux.

**16.** Méthode selon la revendication 15, l'étape de comparaison comprenant la détection d'une différence d'intensité du signal entre le premier signal reçu et le deuxième signal reçu.

**17.** Méthode selon une quelconque des revendications 15-16, l'étape de comparaison comprenant le traitement du premier et/ou du deuxième signal (signaux) reçu(s) avant de les comparer, la comparaison étant effectuée en fonction des signaux traités.

**18.** Méthode selon une quelconque des revendications 15-17, le premier signal étant transmis au cours d'un premier créneau présélectionné et le deuxième signal étant transmis au cours d'un deuxième créneau présélectionné, la durée desdits premier et deuxième créneaux étant de préférence égale.

**19.** Méthode selon une quelconque des revendications 15-18, chacun des signaux émis étant un signal constant, par exemple une onde porteuse ou du type onde porteuse.

**20.** Méthode selon une quelconque des revendications 15-18, chacun des signaux émis étant une impulsion ou un signal du type impulsion.

**21.** Méthode selon une quelconque des revendications 15-20, les étapes d'émission d'un premier et d'un deuxième signal étant effectuées par la transmission d'un premier et d'un deuxième ensemble de paquets de rayonnement électromagnétique, et les étapes de réception du premier et du deuxième signaux étant effectuées en recevant les premier et deuxième ensembles de paquets.

**22.** Méthode selon la revendication 21, l'étape de comparaison comprenant la comparaison des statistiques relatives à l'intensité du signal de chaque paquet afin de détecter des différences dans le contenu énergétique du premier et du deuxième ensembles de paquets.

**23.** Méthode selon la revendication 21 ou 22, l'étape de comparaison comprenant la comparaison de paramètres de signaux, par exemple la polarisation, le spectre et/ou le retard de chaque paquet afin d'identifier des différences entre les paramètres des premier et deuxième ensembles de paquets.

**24.** Méthode selon la revendication 15, le réseau sans fil étant un réseau local sans fil utilisé pour la transmission de données.

**25.** Méthode selon une quelconque des revendications 15-24, les premier et deuxième signaux étant émis et reçus par un ou plusieurs émetteurs-récepteurs.

**26.** Méthode selon une quelconque des revendications 15-25, l'étape de comparaison comprenant la comparaison de la différence détectée avec au moins une valeur connue, de façon à identifier le changement physique causant la différence.

**27.** Méthode selon une quelconque des revendications 15-26, comprenant en outre les étapes

- de collecte et stockage d'informations obtenues préalablement relatives à une pluralité de signaux comparés, et
- de comparaison desdites informations afin de permettre l'évaluation d'un développement temporel des informations obtenues.

**28.** Méthode selon une quelconque des revendications 15-27, comprenant en outre l'étape de détermination de la position de changements physiques dans le volume d'intérêt.

Fig. 1

Second level

First level

Ground level

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4476459 A
- EP 0743540 A2
- US 6288640 B1
- GB 2350898 A
- US 6307475 B

### Non-patent literature cited in the description

- *IEEE 802.11,* 1997
- *IEEE 802.11,* 1997, 3
- *IEEE 802.11,* 1997, 181
- *IEEE 802.11,* 1997, 183
- Physical Layer Convergence Protocol. *IEEE 802.11,* 1997, 8